# FASCICULE DE BREVET EUROPEEN

(11) **EP 0 611 193 B1**
(45) Date de publication et mention de la délivrance du brevet: **14.01.1998**
(21) Numéro de dépôt: 94400240.1
(22) Date de dépôt: 04.02.1994
(51) Int. Cl.: G01B 5/30

(54) **Dispositif de mesure d'efforts exercés sur une pièce mécanique et procédé de fixation**
Vorrichtung zum Messen der Beanspruchung auf mechanischen Teilen und Verfahren zum Binden
Device for measuring stress applied on mechanical part and method of fixation

(30) Priorité: 09.02.1993 FR 9301408
(43) Date de publication de la demande: 17.08.1994
(73) Titulaire: THOMSON-CSF, 75008 Paris (FR); UNIVERSITE DE HAUTE ALSACE, F-68067 Mulhouse Cédex (FR)
(72) Inventeur: Gissinger, Gérard, F-92402 Courbevoie Cédex (FR); Perrone, Jean-Marc, F-92402 Courbevoie Cédex (FR); Renner, Marc, F-92402 Courbevoie Cédex (FR)
(74) Mandataire: Benoit, Monique

(56) Documents cités:
- WO-A-84/02188
- DE-A- 3 438 498
- DE-A- 3 504 872
- US-A- 4 343 197
- MEASUREMENT, vol.6, no.4, Octobre 1988, LONDON, GB pages 168 - 174 K. HORN 'quasi-hermetic sealing of open-faced strain gauges.'
- ISA TRANSACTIONS, vol.27, no.4, 1988, NC, USA pages 21 - 26, XP000110694; M.H. JONES ET AL. 'a method for measuring skin tension.'

## Description

La présente invention concerne un dispositif de mesure d'efforts exercés sur une pièce mécanique et un procédé de fixation de ce dispositif. Elle s'applique notamment à la mesure d'efforts ou de déformations exercés sur des pièces mécaniques telles que des étriers de frein ou des organes de traction par exemple. Plus généralement, elle s'applique à la mesure d'efforts exercés sur tous types de pièces mécaniques quelque soit la fonction de ces dernières, l'invention s'appliquant avantageusement à des pièces lourdes, encombrantes, peu maniables ou destinées à être fabriquées en grande série par exemple.

Les performances du contrôle en ligne, de la maintenance conditionnelle ou de la régulation de systèmes mécaniques tels que des systèmes de freinage ou de traction seraient notamment améliorées grâce à la mesure des déformations exercées sur certaines des principales pièces mécaniques sollicitées comme un étrier de frein dans un système de freinage par exemple. En effet, la connaissance des déformations permet aisément de remonter à l'état de sollicitation d'un système, la connaissance des efforts exercés sur l'étrier précité, par exemple, permettant de connaître le couple de freinage réellement exercé sur ce dernier, indépendamment notamment des glissements ou des déformations des roues. Dans ce dernier cas, une bonne connaissance du couple de freinage améliore notamment les performances de l'asservis-sement du freinage.

De nombreuses autres applications nécessitent aussi une mesure fiable des déformations de pièces mécaniques constitutives d'un système donné, que ce système soit dynamique, tournant par exemple, ou statique, comme dans le cas de dispositif de maintien ou de renforcement mécanique par exemple.

Ces déformations mécaniques sont causées par des efforts s'exerçant sur les pièces. Les déformations étant liées aux efforts par le biais des lois de la mécanique des matériaux, il revient au même de faire mention de mesure de déformation ou de mesure d'effort. Dans la suite du texte, ces deux termes seront indifféremment utilisés. Ces efforts sont par exemple dus à des sollicitations de traction, de compression, de flexion, de torsion ou de cisaillement.

Les capteurs d'effort existants sont difficiles à fixer sur les pièces à contrôler car ils nécessitent en général un grand nombre de points d'ancrage. Par ailleurs, les signaux électriques fournis par les jauges d'extensométrie constituant ces capteurs, ont un très bas niveau alors que les circuits de mise en forme de ces signaux sont éloignés de ces jauges. Cet éloignement impose la circulation de signaux de très bas niveau sur des longueurs de câbles non négligeables, soumettant ces signaux à de grands risques de perturbation. Ces capteurs ne sont donc généralement implantés que pour des applications très spécifiques, en raison notamment de leur coût et de la difficulté de mise en oeuvre.

Pour s'affranchir de ces problèmes, une solution peut consister par exemple à effectuer des mesures d'effort par des jauges d'extensométrie directement collées sur des pièces à contrôler. Cependant, une telle solution reste délicate à mettre en oeuvre et difficile à automatiser, notamment à cause de certaines géométries de pièces. Il faut de plus que la colle transmette fidèlement aux jauges les efforts exercés sur les pièces, or, la surface de ces dernières n'étant pas toujours parfaitement plane, cette garantie risque de ne pas être assurée ainsi que la garantie de la fixation de la jauge. De plus, le problème de l'éloignement des circuits de mise en forme des signaux reste posé. Ces circuits amplifient les signaux qu'ils reçoivent de la part des jauges d'extensométrie et délivrent, sous forme analogique ou numérique par exemple, les mesures d'efforts.

Un article de M.H. JONES et AL paru dans la revue ISA TRANSACTIONS, vol. 27, n° 4, 1988, page 21-26 présente une méthode pour mesurer la tension exercée sur la peau de l'homme.

Le but de l'invention est de pallier aux inconvénients précités, notamment en facilitant la fixation sur des pièces mécaniques à contrôler, des moyens de mesure des efforts subis par ces dernières.

A cet effet, l'invention a pour objet un dispositif de mesure d'efforts exercés sur une pièce mécanique, caractérisé en ce qu'il comprend au moins une plaquette et une jauge d'extensométrie, la jauge étant fixée sur la plaquette, laquelle est reliée à la pièce mécanique par des moyens de liaison et de couplage, la jauge d'extensométrie générant un signal électrique représentatif des efforts exercés.

L'invention a également pour objet un procédé pour la fixation du dispositif précité sur des pièces mécaniques.

L'invention a pour principaux avantages qu'elle permet de disposer les circuits de mise en forme des signaux délivrés par les jauges d'extensométrie à proximité de ces dernières, qu'elle s'adapte à tous types de pièces mécaniques, qu'elle permet un montage automatique des moyens de mesures, en grande série notamment, qu'elle est peu encombrante et qu'elle est économique.

D'autres caractéristiques et avantages de l'invention apparaîtront à l'aide de la description qui suit, faite en regard des dessins annexés qui représentent :
- les figures 1 et 2, des schémas de principe de dispositif selon l'invention ;
- les figures 3 et 4, des modes de réalisation possibles de dispositifs selon l'invention ;
- les figures 5a, 5b, 5c, 5d et 6, une forme particulière d'une plaquette, élément du dispositif selon l'invention, et des exemples de précontrainte de pose de cette plaquette ;
- la figure 7, une illustration d'un procédé de fixation d'un dispositif selon l'invention sur une pièce mécanique à contrôler.

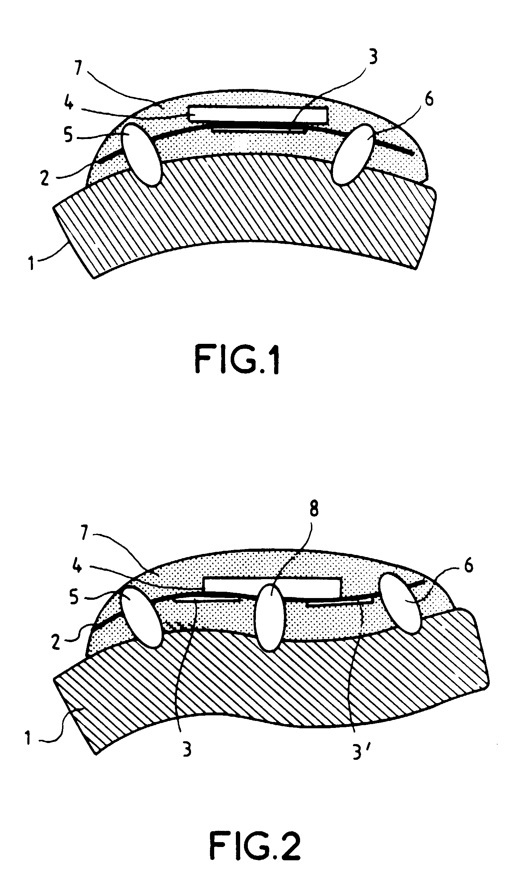

La figure 1 présente un schéma de principe d'un mode de réalisation possible d'un dispositif selon l'invention pour mesurer des efforts exercés sur une pièce mécanique 1. Cette pièce peut par exemple être un étrier de frein ou tout autre organe mécanique. Le dispositif selon l'invention comprend au moins une plaquette 2 et une jauge d'extensométrie 3 susceptible de générer un signal électrique fonction de la déformation à mesurer, cette jauge étant fixée sur la plaquette 2, collée par exemple. Avantageusement, des moyens de mise en forme 4 du signal électrique généré par la jauge d'extensométrie 3 peuvent être fixés sur la plaquette 2 donc à proximité de la jauge. Ce rapprochement évite notamment à ce signal, de très faible niveau, d'être perturbé le long de fils de liaison. De façon connue de l'homme du métier, la jauge d'extensométrie peut constituer par exemple un élément résistif d'un pont de Wheatstone, la moindre déformation de la jauge modifiant sa résistance donc le signal en sortie de pont. La plaquette 2 est reliée à la pièce mécanique 1 par des moyens de liaison et de couplage 5, 6. La liaison de la plaquette 2 à la pièce 1 est assurée par des éléments rigides tels que des vis, des plots, des languettes ou des goupilles par exemple. Des éléments de couplage permettent de leur côté la transmission intégrale des déformations de la pièce mécanique 1 à la plaquette 2. A cet effet, ils sont constitués par exemple d'un matériau dont la déformation est négligeable devant celle de la plaquette proprement dite. Ces éléments de couplage peuvent être de la colle à un ou plusieurs composants, des soudures ou tout autre moyen de réalisation d'une liaison de type encastré par exemple.

En option, le dispositif de mesure d'efforts selon l'invention peut être recouvert d'un enduit de protection 7. Ce dernier protège notamment le dispositif contre l'environnement, c'est-à-dire contre l'humidité, la température ou un brouillard acide par exemple.

La figure 1 illustre un cas d'application du dispositif de mesure selon l'invention où la déformation de la pièce mécanique à mesurer est une déformation de simple traction ou de simple compression. Dans ce cas, deux points de liaison suffisent à relier la plaquette 2 et la pièce mécanique 1.

La figure 2 présente un schéma de principe d'un autre mode de réalisation possible de dispositif selon l'invention dans un cas d'application notamment où la pièce mécanique 1 à contrôler subit côte à côte deux types de déformation opposée, par exemple à la fois une traction et une compression. Pour évaluer ces déformations, une deuxième jauge d'extensométrie 3' est implantée sur la plaquette 2, la première 3 étant destinée à un premier type d'effort et la deuxième 3' étant destinée à un deuxième type d'effort. Dans ce cas d'application, deux points de liaison permettraient uniquement de mesurer une compensation des déformations. Pour éviter ce phénomène et obtenir la mesure de chacune des déformations, un troisième point de liaison accueillant des moyens de liaison et de couplage 8 est nécessaire.

Selon le nombre et les types d'efforts exercés sur la pièce mécanique 1, d'autres jauges d'extensométrie et d'autres points de liaison peuvent être ajoutés, par exemple autant de points de liaison qu'il y a d'efforts, autant de jauges d'extensométrie qu'il y a d'efforts.

La souplesse d'implantation du dispositif de mesure selon l'invention permet de modifier facilement sa position sur une pièce mécanique à contrôler. Cette position doit se situer préférentiellement à l'endroit des déformations. Ces dernières sont de l'ordre de quelques micromètres par mètre à quelques centaines de micromètres par mètre. Le positionnement de la plaquette 2 est avantageusement issu d'une analyse préalable des efforts exercés sur la pièce. Cette analyse peut être effectuée par exemple par une méthode des éléments finis.

Selon l'invention, la plaquette 2 présente une très forte sensibilité aux déformations. Elle peut être constituée par exemple d'une fine plaque d'acier. Elle peut par exemple être équipée d'un pont complet comprenant au moins une jauge d'extensométrie, alimenté par une tension continue, une déformation de la pièce mécanique à contrôler modifie la résistance d'au moins une des jauges et modifie donc la tension de sortie du pont. Une calibration peut par exemple être réalisée pour mesurer les déformations.

Les moyens de mise en forme 4 du signal électrique généré par une jauge d'extensométrie 3 comportent par exemple des circuits d'amplification et de filtrage du signal reçu. Avec des circuits connus de l'homme du métier, les moyens de mise en forme peuvent délivrer par exemple une information ayant la forme d'un signal de tension, de courant, d'un signal numérisé ou d'un signal en fréquence. Dans ce dernier cas, une valeur de fréquence constitue l'information de mesure des déformations. Cette solution est notamment avantageuse quand le dispositif de mesure d'efforts selon l'invention est implanté sur un dispositif tournant. En effet, dans ce cas, le signal fréquentiel peut être par exemple transmis à un dispositif de traitement de l'information ou de commande situé sur une partie fixe par l'intermédiaire d'un transformateur, le circuit primaire de ce dernier étant sur la partie tournante et son circuit secondaire sur la partie fixe, les deux circuits, primaire et secondaire, étant concentriques.

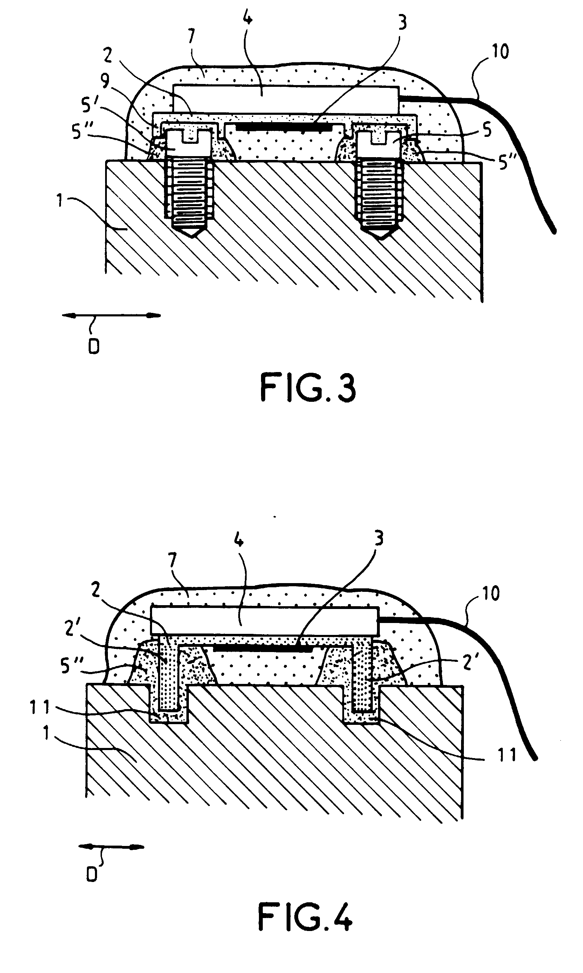

La figure 3 présente, à titre d'exemple, un premier mode de réalisation possible d'un dispositif selon l'invention. Les moyens de liaison et de couplage 5 sont constitués de vis 5' pour assurer la liaison mécanique entre la plaquette 2 et la pièce mécanique 1 et de colle 5'' pour assurer le couplage mécanique entre la plaquette 2 et la pièce mécanique 1. Les vis 5' étant vissées dans la pièce mécanique 1, la plaquette 2 est par exemple collée sur ces dernières au moyen de la colle 5''. La plaquette 2 est par exemple posée sur les vis 5' par des guides 9 prévus à cet effet. Les moyens de mise en forme 4 des signaux électriques générés par la jauge d'extensométrie 3 sont reliés par exemple à leur sortie à une liaison conductrice 10. Cette liaison 10 transmet les informations de mesure, sous forme de signaux analogiques, numériques ou fréquentiels à un organe de lecture, de commande ou de traitement par exemple.

A titre d'exemple, le cas d'application de mesure d'efforts de la figure 3 nécessite deux points de liaison correspondant notamment à une simple déformation de traction ou de compression suivant une direction D.

La figure 4 présente un deuxième mode de réalisation possible d'un dispositif de mesure d'efforts selon l'invention. A la différence de l'exemple précédent la pièce à contrôler 1 comporte des rainures 11 et la plaquette 2 possède des parois 2' perpendiculaires à sa base s'encastrant dans les rainures 11 pour assurer la liaison mécanique entre la plaquette 2 et la pièce mécanique 1. Le couplage mécanique est assuré par une colle 5'', la plaquette 2 étant collée au moins au niveau des rainures 11. Comme dans le cas d'application précédent, deux points de liaison sont nécessaires aux mesures des déformations selon une direction D. Les dispositifs des figures 3 et 4 peuvent être recouverts d'un enduit de protection 7 mentionné précédemment.

Une thermistance peut être couplée aux jauges d'extensométrie placées sur la plaquette 2. En effet, en cas d'élévation de température notamment, il se produit une modification des paramètres de jauge qui entraînent une dérive des signaux générés. Dans ce cas, une fonction correctrice peut par exemple être mémorisée dans les moyens de mise en forme 4 des signaux, la correction de ces derniers en fonction de la température pouvant par exemple être réalisée par un microprocesseur à la lecture de la température et de la fonction mémorisée. Ce mode de correction peut notamment être implanté sur des dispositifs de mesure d'efforts selon l'invention utilisés par exemple pour mesurer les forces de freinage d'un véhicule automobile équipé d'un frein à disque.

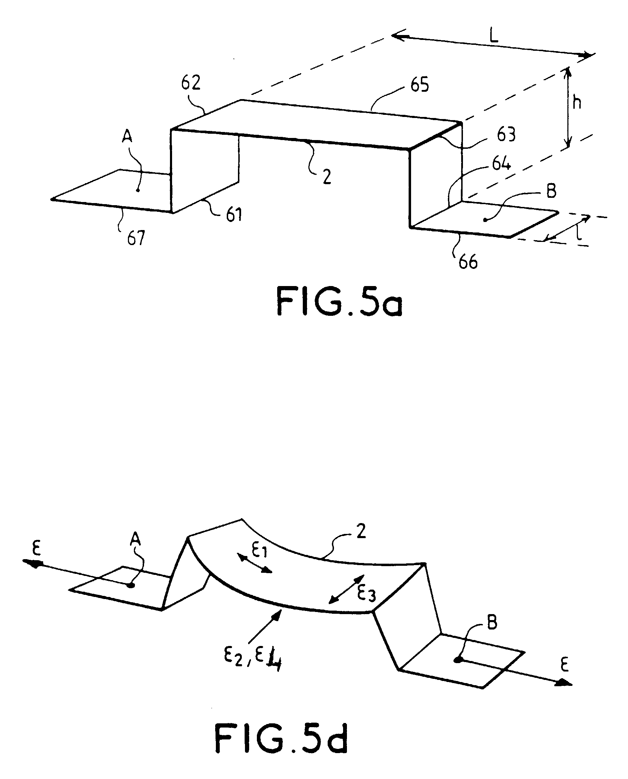

La figure 5a illustre une forme particulière possible d'une plaquette 2 d'un dispositif selon l'invention. Cette forme permet notamment de solliciter une plaquette souple en flexion avec une précontrainte de pose. Cette plaquette est constituée d'une bande en matériau simple de largeur 1 et d'épaisseur donnée e, métallique par exemple, pliée ou assemblée selon quatre lignes 61, 62, 63, 64qui peuvent présenter une arrête vive ou un congé pour former une partie supérieure 65 de largeur L située à une hauteur h des parties inférieures 66, 67. Ces dernières sont par exemple ancrées à la pièce mécanique 1 en des points de fixation A, B par vissage, rivetage, collage ou par combinaison de l'un ou l'autre de ces moyens. Ces points de fixation sont à une distance donnée a des lignes inférieures de pliage ou d'assemblage 61, 64.

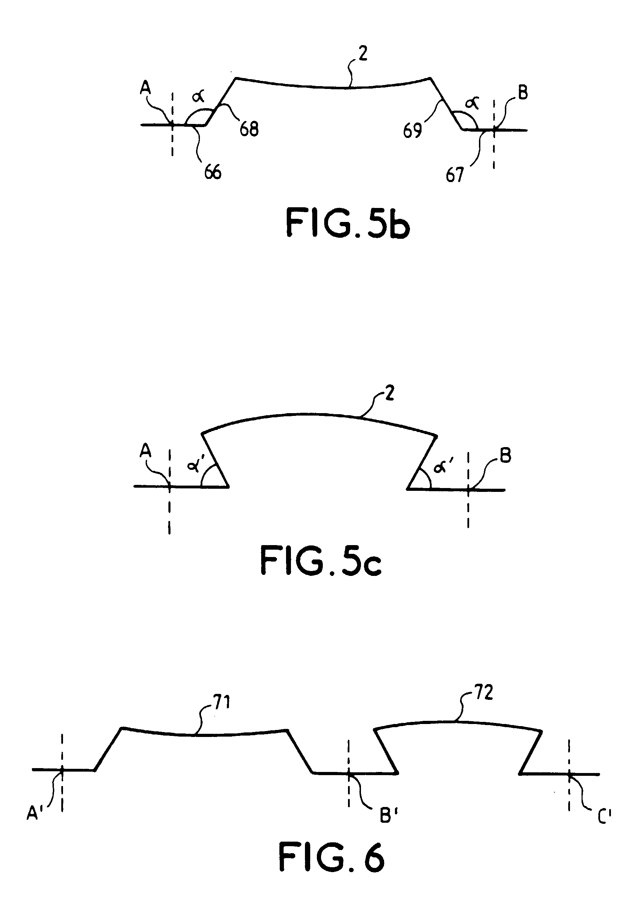

Les figures 5b et 5c montrent qu'il est possible de donner une sollicitation initiale de flexion à la plaquette 2. A titre d'exemple, deux contraintes de pose sont illustrées.

La première contrainte de pose que représente la figure 5b est donnée lors de la fixation d'une plaquette dont l'angle α initial est supérieur à 90°, le fait de rabattre les parties inférieures 66 et 67 imposant un éloignement des points de fixation A, B par rapport à la forme initiale et une flexion concave de la zone 65.

La seconde contrainte de pose que représente la figure 5c est donnée lors de la fixation d'une plaquette dont l'angle α' initial est inférieur à 90°, le fait de rabattre les parties inférieures 66 et 67 imposant un rapprochement des points de fixation A, B par rapport à la forme initiale et une flexion convexe de la zone 65.

Toute déformation de traction ou de compression du support de la plaquette 2, c'est-à-dire de la pièce mécanique 1, se traduit alors par une modification de la sollicitation en flexion de la plaquette et ainsi par la modification des déformations superficielles proportionnelles à la traction ou à la compression. Ces déformations superficielles peuvent être relevées à l'aide de jauges d'extensométrie 3 du type par exemple de celles précédemment décrites.

La figure 5d illustre un cas où la pièce mécanique 1 supportant la plaquette 2 subit une déformation de traction ε, la précontrainte de pose de la plaquette étant alors celle de la figure 5b. La plaquette 2 subit alors des modifications de ses déformations superficielles, à savoir une déformation longitudinale supérieure ε₁, une déformation longitudinale inférieure ε₂, une déformation transversale supérieure ε₃ et une déformation transversale inférieure ε₄. Selon les cas ou les besoins, ces déformations superficielles ε₁, ε₂, ε₃, ε₄ ne sont pas toutes mesurées. Le choix des paramètres précités L, I, a, e, h, α et α' conditionne la sensibilité de la plaquette aux efforts appliqués.

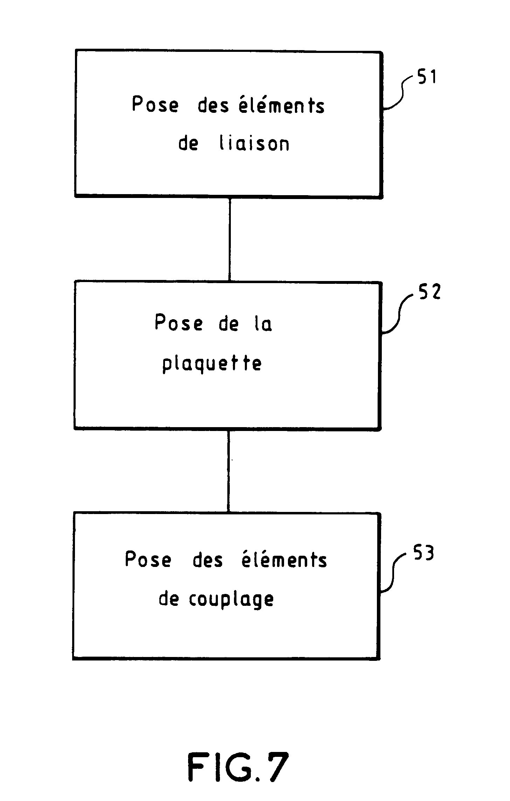

Dans le cas de deux types de déformations opposées mentionnées à l'aide de la figure 2 précédemment décrite, une plaquette souple d'une forme particulière peut être réalisée selon la combinaison des formes illustrées par les figures 5b et 5c. Cette forme est illustrée par la figure 6 où la plaquette est fixée en trois points de fixation A', B', C' sur la pièce mécanique 1 et rassemble une première partie 71 correspondant à une précontrainte pour mesurer un effort de traction, forme illustrée par la figure 5b, et une deuxième partie 72 correspondant à une précontrainte pour mesurer un effort de compression, forme illustrée par la figure 5c.

Le dispositif de mesure d'efforts selon l'invention peut être par exemple fixé sur une pièce mécanique à contrôler suivant un procédé comportant trois étapes, illustré par la figure 7.

Dans une première étape 51, les éléments ou moyens de liaison sont posés sur la pièce mécanique à contrôler. Ces éléments de liaison tels que des vis 5', des rainures 11, des plots ou des goupilles par exemple sont implantés de préférence en des points déterminés de la pièce mécanique. Cependant, grâce à la mise en place ultérieure des éléments de couplage, la pose des éléments de liaison ne nécessite pas de précision particulière.

Dans une deuxième étape 52, la plaquette 2 est posée sur les éléments de liaison, de préférence sans application de forces ou de moments susceptibles de conduire à une précontrainte de pose.

La pose des éléments ou moyens de couplage a lieu dans une troisième étape 53, la solidarisation définitive de la plaquette et des éléments de liaison étant obtenue par la mise en place des éléments de couplage. Si les éléments de couplage sont constitués de colle notamment, la mise en place de celle-ci peut avoir lieu avant ou après la pose de la plaquette. Dans ce dernier cas, la colle peut se présenter sous la forme d'une ampoule, percée lors de la mise en place de la plaquette par exemple. Cette colle peut être à un ou deux composants selon l'état des surfaces à coupler. Les moyens de couplage peuvent aussi être constitués par exemple d'une soudure. Dans ce cas, le matériau de soudure peut par exemple être présenté sous forme de pastilles et être mis en fusion par divers moyens connus de l'homme du métier, ces pastilles pouvant être en matière plastique ou en étain par exemple.

## Revendications

1. Dispositif de mesure d'efforts exercés sur une pièce (1), comprenant au moins une plaquette (2) et une jauge d'extensométrie (3), la jauge (3) étant fixée sur la plaquette (2), laquelle est reliée à la pièce (1) par des moyens de liaison et de couplage (5, 6, 8), la jauge d'extensométrie (3) générant un signal électrique représentatif des efforts exercés, caractérisé en ce que la pièce (1) étant une pièce mécanique, la plaquette (2) est fixée sur la pièce mécanique (1) selon une précontrainte de pose de façon à ce que les parties inférieures forment un angle (α, α') prédéterminé par rapport aux côtés (68, 69) de la plaquette.

2. Dispositif selon la revendication 1, caractérisé en ce qu'au moins deux points de liaison relient la plaquette (2) à la pièce mécanique (1).

3. Dispositif selon l'une quelconque des revendications précédentes, caractérisé en ce que des moyens (4) de mise en forme du signal électrique sont implantés sur la plaquette (2).

4. Dispositif selon la revendication 3, caractérisé en ce que les moyens de mise en forme (4) délivrent un signal fréquentiel.

5. Dispositif selon l'une quelconque des revendications précédentes, caractérisé en ce qu'une thermistance est couplée à la jauge d'extensométrie pour permettre la compensation de la dérive en température du signal généré.

6. Dispositif selon l'une quelconque des revendications précédentes, caractérisé en ce que les moyens de couplage sont constitués de colle (5").

7. Dispositif selon l'une quelconque des revendications 1 à 5, caractérisé en ce que les moyens de couplage sont constitués de soudure.

8. Dispositif selon l'une quelconque des revendications précédentes, caractérisé en ce qu'il est recouvert d'un enduit de protection (7).

9. Dispositif selon l'une quelconque des revendications précédentes, caractérisé en ce que la plaquette (2) est constituée d'une bande en matériau souple pliée selon quatre lignes (61, 62, 63, 64) pour former une partie supérieure (65) reliée par des côtés (68, 69) à deux parties inférieures (66, 67), lesquelles sont fixées à la pièce mécanique (1).

10. Dispositif selon l'une quelconque des revendications précédentes, caractérisé en ce que la pièce mécanique (1) ayant subi une déformation de traction ou de compression, des jauges d'extensométrie (3) fixées sur la plaquette (2) mesurent au moins une déformation superficielle parmi les quatre suivantes, longitudinale supérieure (ε₁), longitudinale inférieure (ε₂), transversale supérieure (ε₃) et transversale inférieure (ε₄), ces déformations superficielles étant induites par la déformation subie par la pièce mécanique (1).

11. Procédé de fixation du dispositif selon l'une quelconque des revendications précédentes, caractérisé en ce qu'il comprend trois étapes :
- une première étape (51) où les moyens de liaison sont posés sur la pièce mécanique (1)
- une deuxième étape (52) où la plaquette (2) est posée sur les moyens de liaison
- une troisième étape (53) où sont posés les moyens de couplage, la solidarisation définitive de la plaquette (2) et des moyens de liaison étant obtenue par la pose des moyens de couplage.

12. Procédé selon la revendication 11, caractérisé en ce que les moyens de couplage sont constitués d'une colle conditionnée dans au moins une ampoule avant la pose, l'ampoule étant fixée sur la face de la plaquette (2) dirigée vers la pièce mécanique (1) et percée lors de la pose de la plaquette (2) sur les moyens de liaison.

## Patentansprüche

1. Vorrichtung zur Messung von Kräften, die auf ein Bauteil (1) einwirken, mit mindestens einer Platte (2) und einem Dehnungsmeßstreifen (3), wobei der Streifen (3) auf der Platte (2) befestigt ist, die mit dem Bauteil (1) über Verbindungs- und Koppelmittel (5, 6, 7) verbunden ist, und wobei der Dehnungsmeßstreifen (3) ein elektrisches Signal erzeugt, das für die auftretenden Kräfte repräsentativ ist, dadurch gekennzeichnet, daß, wenn das Bauteil (1) ein mechanisches Bauteil ist, die Platte (2) auf dem mechanischen Bauteil (1) gemäß einer Vorbelastung so montiert wird, daß die unteren Bereiche einen vorbestimmten Winkel (α, α') mit den Seitenbereichen (68, 69) der Platte bilden.

2. Vorrichtung nach Anspruch 1, dadurch gekennzeichnet, daß mindestens zwei Verbindungspunkte die Platte (2) mit dem mechanischen Bauteil (1) verbinden.

3. Vorrichtung nach einem beliebigen der vorhergehenden Ansprüche, dadurch gekennzeichnet, daß Mittel (4) zur Umwandlung des elektrischen Signals auf der Platte (2) montiert sind.

4. Vorrichtung nach Anspruch 3, dadurch gekennzeichnet, daß die Mittel (4) ein Frequenzsignal liefern.

5. Vorrichtung nach einem beliebigen der vorhergehenden Ansprüche, dadurch gekennzeichnet, daß ein temperaturabhängiger Widerstand mit dem Dehnungsmeßstreifen gekoppelt ist, um die Kompensation der Temperaturabhängigkeit des erzeugten Signals zu erlauben.

6. Vorrichtung nach einem beliebigen der vorhergehenden Ansprüche, dadurch gekennzeichnet, daß die Koppelmittel von einem Klebstoff (5") gebildet werden.

7. Vorrichtung nach einem der Ansprüche 1 bis 5, dadurch gekennzeichnet, daß die Koppelmittel durch eine Verlötung gebildet werden.

8. Vorrichtung nach einem beliebigen der vorhergehenden Ansprüche, dadurch gekennzeichnet, daß sie mit einem Schutzlack (7) bedeckt ist.

9. Vorrichtung nach einem beliebigen der vorhergehenden Ansprüche, dadurch gekennzeichnet, daß die Platte (2) aus einem Band eines biegsamen Materials besteht, das gemäß vier Knicklinien (61, 62, 63, 64) gefaltet ist und so einen oberen Bereich (65) bildet, der über Seiten (68, 69) mit zwei unteren Bereichen (66, 67) verbunden ist, die auf dem mechanischen Bauteil (1) befestigt sind.

10. Vorrichtung nach einem beliebigen der vorhergehenden Ansprüche, dadurch gekennzeichnet, daß im Fall eines mechanischen Bauteils (1), das eine Zug- oder Kompressionsverformung erfahren hat, Dehnungsmeßstreifen (3), die auf der Platte (2) befestigt sind, mindestens eine der vier folgenden oberflächlichen Verformungen messen, nämlich eine obere Längsverformung (ε₁), eine untere Längsverformung (ε₂), eine obere Querverformung (ε₃) und eine untere Querverformung (ε₄), wobei diese Oberflächenverformungen durch die von dem mechanischen Bauteil (1) erfahrene Verformung hervorgerufen werden.

11. Verfahren zur Befestigung der Vorrichtung nach einem beliebigen der vorhergehenden Ansprüche, dadurch gekennzeichnet, daß es drei Schritte enthält, nämlich:
- einen ersten Schritt (51), in dem die Verbindungsmittel auf das mechanische Bauteil (1) aufgebracht werden,
- einen zweiten Schritt (52), in dem die Platte (2) auf den Verbindungsmitteln aufgebracht wird,
- einen dritten Schritt (53), in dem die Koppelmittel montiert werden, wobei die endgültige Fixierung der Platte (2) und der Verbindungsmittel durch das Anbringen der Koppelmittel erhalten wird.

12. Verfahren nach Anspruch 11, dadurch gekennzeichnet, daß die Koppelmittel von einem Klebstoff gebildet werden, der vor der Montage in mindestens einer Ampulle konditioniert ist, wobei die Ampulle auf der dem mechanischen Bauteil (1) zugewandten Seite der Platte (2) fixiert ist und beim Anbringen der Platte (2) auf den Verbindungsmitteln durchstoßen wird.

## Claims

1. Device for measuring the stresses exerted on a component (1), comprising at least one small plate (2) and a strain gauge (3), the gauge (3) being attached to the small plate (2), which is connected to the component (1) by connection and coupling means (5, 6, 8), the strain gauge (3) generating an electrical signal representative of the stresses exerted, characterized in that since the component (1) is a mechanical component, the small plate (2) is attached to the mechanical component (1) with a fitting prestress so that the lower parts make a predetermined angle (α, α') with respect to the sides (68, 69) of the small plate.

2. Device according to Claim 1, characterized in that at least two connection points connect the small plate (2) to the mechanical component (1).

3. Device according to any one of the preceding claims, characterized in that means (4) for shaping the electrical signal are implanted on the small plate (2).

4. Device according to Claim 3, characterized in that the shaping means (4) deliver a frequency signal.

5. Device according to any one of the preceding claims, characterized in that a thermistor is coupled to the strain gauge in order to compensate for temperature drift of the signal generated.

6. Device according to any one of the preceding claims, characterized in that the coupling means consist of adhesive (5").

7. Device according to any one of Claims 1 to 5, characterized in that the coupling means consist of solder.

8. Device according to any one of the preceding claims, characterized in that it is covered with a protective coating (7).

9. Device according to any one of the preceding claims, characterized in that the small plate (2) consists of a strip made of flexible material folded along four lines (61, 62, 63, 64) in order to form an upper part (65) connected by sides (68, 69) to two lower parts (66, 67) which are attached to the mechanical component (1).

10. Device according to any one of the preceding claims, characterized in that as the mechanical component (1) has undergone a tensile or compressive strain, strain gauges (3) fixed to the small plate (2) measure at least one surface strain from among the following four, upper longitudinal surface strain (ε₁), lower longitudinal surface strain (ε₂), upper transverse surface strain (ε₃) and lower transverse surface strain (ε₄), these surface strains being induced by the strain undergone by the mechanical component (1).

11. Method of attaching the device according to any one of the preceding claims, characterized in that it comprises three steps:
- a first step (51) in which the connection means are put into position on the mechanical component (1);
- a second step (52) in which the small plate (2) is put into position on the connection means;
- a third step (53) in which the coupling means are put into position, the small plate (2) and the coupling means being finally secured by putting the coupling means into position.

12. Method according to Claim 11, characterized in that the coupling means consist of an adhesive packaged in at least one ampoule before the adhesive is put into position, the ampoule being attached to that face of the small plate (2) which is turned towards the mechanical component (1) and being pierced when the small plate (2) is put into position on the connection means.
